# EUROPÄISCHE PATENTSCHRIFT

(11) **EP 4 112 954 B1**
(45) Veröffentlichungstag und Bekanntmachung des Hinweises auf die Patenterteilung: **26.02.2025**
(21) Anmeldenummer: 22180874.4
(22) Anmeldetag: 24.06.2022
(51) Int. Cl.: F16C 17/24, F16C 17/02

(54) **BUCHSE FÜR EIN GLEITLAGER, GLEITLAGERMESSANORDNUNG UND VERFAHREN**
BUSH FOR A SLIDING BEARING, SLIDING BEARING MEASURING DEVICE AND METHOD
DOUILLE POUR UN PALIER LISSE, AGENCEMENT DE MESURE DE PALIER LISSE ET PROCÉDÉ

(30) Priorität: 29.06.2021 DE 102021206766
(43) Veröffentlichungstag der Anmeldung: 04.01.2023
(73) Patentinhaber: Yamaichi Electronics Deutschland GmbH, 85609 Aschheim-Dornach (DE)
(72) Erfinder: Quiter, Michael, 57482 Wenden (DE)
(74) Vertreter: Müller-Boré & Partner Patentanwälte PartG mbB

(56) Entgegenhaltungen:
- EP-A1- 0 029 736
- EP-A1- 1 602 842
- DE-U1- 202019 101 776
- US-A- 4 721 399
- US-A- 6 080 982

## Beschreibung

Die vorliegende Erfindung betrifft eine Buchse für ein Gleitlager, ein Gleitlager aufweisend eine Buchse, eine Gleitlagermessanordnung sowie ein Verfahren zum Bestimmen der Abnutzung einer Buchse eines Gleitlagers.

Bei herkömmlichen Gleitlagerbuchsen zur Lagerung einer Welle wird die maximale Lebensdauer der Gleitlagerbuchse für den Einsatz zumeist auf Basis durchschnittlicher Kennwerte der Lagerbuchse, und unter Berücksichtigung der erwarteten Drehgeschwindigkeiten der Welle über einen bestimmten Zeitraum hinweg, abgeschätzt. Anhand der abgeschätzten maximalen Lebensdauer der Gleitlagerbuchse wird die Gleitlagerbuchse unter Berücksichtigung eines gewissen Sicherheitsfaktors vor der maximal zu erwartenden Lebensdauer ausgetauscht, um eine Beschädigung der Gleitlagerbuchse zu vermeiden, da die Beschädigung der Gleitlagerbuchse ansonsten einen Maschinenstillstand oder ähnliches bewirken könnte.

Da Gleitlagerbuchsen im Zuge ihrer Herstellung fertigungstechnischen bzw. herstellungstechnischen Variationen unterliegen, wie beispielsweise Abweichungen innerhalb einer Fertigungstoleranz, sowie Abweichungen in der Materialzusammensetzung, haben Gleitlagerbuchsen voneinander abweichende Eigenschaften im Einsatz. Folglich hat jede Gleitlagerbuchse bzgl. eines bestimmten Einsatzszenarios eine bestimmte maximale Lebensdauer, die von der Lebensdauer einer anderen Gleitlagerbuchse abweicht.

Beim herkömmlichen Einsatz von Gleitlagerbuchsen wird eine Vielzahl von Gleitlagerbuchsen getestet, so dass zunächst eine zu erwartende Mindestlebensdauer für die Gleitlagerbuchsen bestimmt wird. Anhand der ertesteten Mindestlebensdauer wird mittels eines zusätzlich in Betracht gezogenen Sicherheitsfaktors eine Lebensdauer für den Einsatz bestimmt, ab der ein Austausch der Gleitlagerbuchse erfolgen soll. Diese mittels des Sicherheitsfaktors reduzierte Lebensdauer wird berechnet, um die Wahrscheinlichkeit einer Beschädigung der Gleitlagerbuchse im Einsatz gering zu halten. Die somit erhaltene Lebensdauer für den Einsatz bis zum Austausch stellt somit eine Lebensdauer dar, welche mit einer bestimmten Wahrscheinlichkeit von jeder Gleitlagerbuchse erreicht wird, ohne während dem Einsatz beschädigt zu werden.

In Folge dessen werden einerseits vergleichsweise haltbare Gleitlagerbuchsen deutlich zu früh ausgetauscht, und andererseits kann nicht ausgeschlossen werden, dass aufgrund von Lastspitzen im Einsatz einzelne Gleitlagerbuchsen nicht doch beschädigt werden.

US 4 721 399 A beschreibt ein Gleitlager, welches eine Stützbasis umfasst, die eine Gleitschicht trägt und in einem Lagergehäuse gelagert ist. Zur lokalen Bestimmung der Temperatur der Gleitschicht ist in der Trägerbasis ein Wärmeleiter eingelegt, der die Wärme an ein im Lagergehäuse befindliches Temperaturfühler- und Messelement weiterleitet. Der Wärmeleiter ist in einem Stecker positioniert und darin von einer Ummantelung umgeben. Um einen innigen Kontakt zwischen dem Heizleiter und dem Temperaturfühler- und Messelement herzustellen, wird dieses durch eine Feder in Richtung des Heizleiters vorgespannt. Mithilfe von Führungsschienen kann der Trägersockel in das Lagergehäuse gedreht werden, indem das Element von der Führungsschiene gegen die Kraft der Feder zurückgezogen wird und entlang des Umfangs des Trägersockels läuft, bis es mit dem Wärmeleiter fluchtet.

EP 0 029 736 A1 beschreibt eine Methode und ein Gerät zur Diagnose der Betriebsbedingungen eines Lagers, wobei Drücke eines Ölfilms, der sich auf einer Gleitfläche des Lagerzapfens bildet, an mehreren Stellen erfasst werden, und die Druckdifferenz zwischen den Drücken des Ölfilms, die an den mehreren Punkten erfasst werden, berechnet wird. Die Durchbiegung des Lagers gegenüber der Welle wird anhand der berechneten Druckdifferenz des Ölfilms ermittelt, so dass die Betriebsbedingungen des Lagers anhand seiner Durchbiegung beurteilt werden. Temperaturen der Lageroberflächenschicht und die vom Lager erzeugten Geräusche werden ebenfalls gemessen und analysiert. Der Lagerzustand, wie durch den Druck des Ölfilms angezeigt, wird den Lagerzuständen verglichen, wie durch die Lageroberflächenschichttemperatur und die Lagergeräusche angezeigt.

EP 1 602 842 A1 beschreibt betrifft ein Gleitlager mit einem ersten Lagerring, der eine erste Lagerfläche aufweist und einem zweiten Lagerring, der eine zweite Lagerfläche aufweist. Die erste Lagerfläche und die zweite Lagerfläche sind jeweils sphärisch oder zylindrisch ausgebildet und werden durch einen Gleitbelag, der zwischen der ersten Lagerfläche und der zweiten Lagerfläche angeordnet ist und an einem der beiden Lagerringe befestigt ist, auf einen Abstand zueinander gehalten. Das Gleitlager weist die Besonderheit auf, dass am ersten Lagerring wenigstens ein Sensor befestigt ist zur Erfassung einer Messgröße, die von der Entfernung des Sensors von der zweiten Lagerfläche abhängt.

US 6 080 982 A beschreibt faseroptische Filamente, die in einer Lagerfläche eingebettet sind. Im Rahmen eines mechanischen Lagersystems verschleißen die Filamente mit der Abnutzung der Lageroberfläche. Basierend auf der beobachteten Lichtmenge, die durch die Filamente übertragen wird, steht die Verschlechterung der Filamente in messbarem Zusammenhang mit der Abnutzung der Lageroberfläche. Zur Beobachtung wird Licht verwendet.

DE 20 2019 101776 U1 beschreibt ein Kunststoff-Gleitelement zur schmiermittelfreien Lagerung in einem Gleitlager, wobei das Gleitelement ein aus Kunststoff gefertigtes, insbesondere im Spritzgussverfahren gefertigtes, Formteil umfasst, das eine Gleitfläche zur beweglichen Führung von zwei Lagerteilen relativ zueinander aufweist, wobei am Formteil eine elektrische Funktionsschaltung mit Sensorfunktion zur Erfassung eines Betriebsparameters angeordnet ist, wobei die Funktionsschaltung mindestens eine Leiterbahnstruktur umfasst, die auf dem Formteil als Träger der Leiterbahnstruktur ausgebildet ist, wobei die Funktionsschaltung vorzugsweise durch ein additives Fertigungsverfahren auf dem vorzugsweise vorgefertigten Formteil aus Kunststoff aufgebracht ist.

Es ist daher Aufgabe der vorliegenden Erfindung, eine Buchse für ein Gleitlager bereitzustellen, welche eine Nutzbarkeit der Buchse im Einsatz verbessert, und welche insbesondere dabei hilft die Lebensdauer einer Buchse im Einsatz bzw. eine Einsatzdauer der Buchse zu verlängern, während eine Beschädigung der Buchse vermieden wird.

Die vorbeschriebene Aufgabe wird durch die Gegenstände der unabhängigen Ansprüche gelöst, bevorzugte Ausführungsformen sind Gegenstand der abhängigen Ansprüche.

Ein Aspekt der Erfindung betrifft eine Buchse für ein Gleitlager, wie in Anspruch 1 definiert.

Vorteilhafterweise ermöglicht die vorliegende Buchse für ein Gleitlager, im nachfolgenden zumeist lediglich als Buchse bezeichnet, dass eine genutzte Einsatzdauer einer Buchse verlängert werden kann, indem ein Zustand der Buchse detektiert wird. Insbesondere ermöglicht die vorliegende Buchse vorteilhaft, dass ein Zustand der Buchse detektiert werden kann, so dass die Einsatzdauer der Buchse näher an die maximale Lebensdauer der Buchse im Einsatz herangeführt werden kann.

Darüber hinaus ist es möglich, insbesondere mittels des zumindest einen Detektorelements verschiedene Zustände der Buchse zu detektieren, so dass eine Mehrzahl von Kriterien zur Beurteilung eines sicheren Einsatzes herangezogen werden kann, so dass die Buchse im Einsatz vorteilhaft besonders sicher vor einer Beschädigung geschützt werden kann. Im beispielhaften Fall der drehbaren Lagerung einer Maschinenwelle mittels der vorliegenden Buchse, ermöglicht die Buchse also einen Maschinenausfall bzw. einen Ausfall der Maschinenwelle aufgrund einer Beschädigung des Gleitlagers bzw. der Buchse zu vermeiden, und darüber hinaus den Materialeinsatz zur gleitenden Lagerung der Maschinenwelle zu verringern, indem die Buchse seltener ausgetauscht werden muss. Eine gezielte Detektion eines oder mehrerer Zustände der Buchse ermöglicht somit weiterhin die Einsparung von Kosten durch einen selteneren Austausch einer Buchse, die Reduzierung des Überwachungs- und Wartungsaufwands von Gleitlagern, sowie die zusätzliche Sicherheit gegenüber Maschinenausfällen bedingt durch eine beschädigte bzw. defekte Buchse für ein Gleitlager.

In beispielhaften Ausführungsformen der Buchse, kann die Buchse eine zylindrische Form aufweisen, und dabei anfangs, das heißt vor Abnutzung, insbesondere einen im Wesentlichen konstanten Außendurchmesser und/oder einen im Wesentlichen konstanten Innendurchmesser aufweisen. Die Buchse kann insbesondere geeignet bzw. konfiguriert sein, eine Welle drehbar zu lagern, wie beispielsweise eine Welle für eine Maschine. Mit anderen Worten kann die Buchse insbesondere konfiguriert sein eine Welle so zu lagern, dass sich die Welle in der Buchse dreht, während sich die Buchse selbst nicht dreht, also stillsteht bzw. drehfest in einem Gehäuse gelagert ist.

In weiteren beispielhaften Ausführungsformen kann die Buchse insbesondere eine konturierte Außenseite aufweisen und/oder einen oder mehrere Flansche aufweisen. Mittels der konturierten Außenseite und/oder des einen oder der mehreren Flansche kann die Buchse an bzw. in einem Gehäuse eines Gleitlagers festgelegt werden, so dass eine Drehung der Buchse im Einsatz verhindert werden kann, während sich eine in der Buchse drehbar gelagerte Welle gleitend drehen kann.

Weiterhin kann das zumindest eine Detektorelement insbesondere als ein passives Detektorelement ausgebildet bzw. konfiguriert sein, so dass ein Zustand der Buchse erst mittels der elektrischen Kontaktierung des Detektorelements beispielhaft durch einen Prüfstecker einer Gleitlagermessanordnung detektiert werden kann. In alternativen Ausführungsformen kann das zumindest eine Detektorelement als ein aktives Detektorelement ausgebildet bzw. konfiguriert sein, welches beispielsweise ein Senderelement aufweist, welches einen detektierten Zustand der Buchse an die Gleitlagermessanordnung übermittelt. Während ein passives Detektorelement vorteilhaft auf einfache Weise eine zuverlässige Detektion eines Zustands der Buchse ermöglicht, bietet ein aktives Detektorelement den Vorteil einer besonders aufwandsarmen Ferndiagnose.

Im weiteren Verlauf werden verschiedene Begriffe wiederholt verwendet, deren Verständnis durch die nachfolgenden Definitionen erleichtert werden soll.

Axiale Richtung: Buchsen von Gleitlagern sind häufig abschnittsweise bzw. bereichsweise im Wesentlichen zylindrisch oder als konturierte Hohlform ausgebildet. Die axiale Richtung stellt dabei grob die zylindrische Achse bzw. die Achse der konturierten Hohlform dar und unterliegt mit anderen Worten nur geringfügigen Abweichungen zur zylindrischen Achse bzw. der Achse der konturierten Hohlform.

Radiale Richtung: In Anlehnung an die axiale Richtung wie oben definiert und beschrieben, bezeichnet die radiale Richtung eine im Wesentlichen senkrecht zur axialen Richtung stehende Richtung.

Querschnitt: Ein Querschnitt einer Buchse für ein Gleitlager kann unterschiedlich definiert sein und stellt eine Schnittansicht bzw. Betrachtungsweise in einer bestimmten Ausrichtung dar. Ein Querschnitt kann beispielsweise im Wesentlichen entlang einer radialen Richtung der Buchse definiert sein und meint damit einen Schnitt, dessen Fläche so gestaltet ist, dass die radiale Richtung der Buchse darin liegt. Wird im folgenden die Ausrichtung des Querschnitts nicht explizit genannt, so ist ein Querschnitt gemeint, dessen Fläche so gestaltet ist, dass die radiale Richtung der Buchse darin liegt.

Elektrisch kontaktierbar bzw. kontaktierbar: Das Detektorelement der vorliegenden Buchse für ein Gleitlager ist elektrisch kontaktierbar konfiguriert. Somit kann das elektrisch kontaktierbare Detektorelement beispielhaft mittels eines Prüfsteckers bzw. eines Prüfkontakts elektrisch kontaktiert werden, so dass eine elektrische Größe von dem Prüfstecker erfasst werden kann, und insbesondere ein messbarer Strom zwischen dem Detektorelement und dem Prüfstecker bzw. dem Prüfkontakt eines Prüfsteckers fließt. Wird im folgenden der Ausdruck kontaktierbar verwendet, so meint dieser stets elektrisch kontaktierbar.

In bevorzugten Ausführungsformen der Buchse kann der Zustand der Buchse zumindest eines von einer Wandstärke der Buchse, einer Porosität der Buchse, oder einer elastischen Eigenschaft der Buchse umfassen.

Mit anderen Worten kann der Zustand der Buchse zumindest eines von einer Wandstärke der Buchse oder eines Elements der Buchse, einer Porosität der Buchse oder eines Elements der Buchse, oder einer elastischen Eigenschaft der Buchse oder umfassen.

Vorteilhafterweise ermöglicht die Detektion eines Zustandes wie Wandstärke der Buchse, Porosität der Buchse und/oder einer elastischen Eigenschaft der Buchse, dass die Einsatzdauer der Buchse besonders nahe an die maximale Lebensdauer der Buchse für einen bestimmten Einsatz herangeführt werden kann. Darüber hinaus kann ein gezielter Austausch der Buchse vor einer Beschädigung der Buchse ermöglicht werden, so dass auch ein Maschinenausfall aufgrund einer Beschädigung des Gleitlagers vermieden werden kann. Weiterhin kann durch den selteneren Austausch der Buchse darüber hinaus der Materialeinsatz zur gleitenden Lagerung einer Maschinenwelle verringert werden, also eine besonders ressourcenschonende Lagerung bereitgestellt werden.

In beispielhaften Ausführungsformen können dabei nur einzelne Zustände wie eine Wandstärke der Buchse, einer Porosität der Buchse, oder einer elastische Eigenschaft der Buchse detektiert werden, oder eine Kombination der Zustände wie eine Wandstärke der Buchse, einer Porosität der Buchse, oder einer elastische Eigenschaft der Buchse detektiert werden.

Die Detektion eines einzelnen Zustands kann dabei vorteilhaft sowohl einfach, als auch zielgerichtet erfolgen. Ist für eine bestimmte Anwendung der Buchse für ein Gleitlager die Wandstärke des Gleitlagers die einzige kritische Größe, welche ab einem bestimmten Wert einen Austausch des Gleitlagers erfordert, um eine Beschädigung der Buchse bzw. des Gleitlagers zu vermeiden, so stellt die Detektion genau dieses einen Zustands die beste und sicherste Möglichkeit dar, die Nutzung des Gleitlagers im Einsatz zu verbessern. Gleiches gilt für die anderen Zustände der Porosität und der elastischen Eigenschaften analog.

Sind dagegen mehrere Zustände einer Buchse für ein Gleitlager als kritische Zustände definiert, welche ab einem bestimmten Wert den Austausch eines Gleitlagers erfordern, um Beschädigungen der Buchse bzw. des Gleitlagers zu vermeiden, so bietet eine kombinierte Detektion mehrerer Zustände die Nutzung des Gleitlagers im Einsatz zu verbessern.

Der Zustand oder die Zustände der Buchse können beispielhaft mittels der Messung von absoluten Strömen, Spannungen, mittels kapazitiver Messung, mittels induktiver Messung, etc. detektiert werden. Darüber hinaus können der Zustand oder die Zustände der Buchse auf relative Weise mittels der Messung von Strömen, Spannungen, mittels kapazitiver Messung, mittels induktiver Messung, etc. detektiert werden, insbesondere mittels vergleichender Messung zwischen einer Mehrzahl von Detektorelementen.

Das zumindest eine Detektorelement ist konfiguriert von einem Prüfstecker elektrisch kontaktiert zu werden, um den Zustand der Buchse zu detektieren.

Durch die elektrische Kontaktierung des zumindest einen Detektorelements mit einem Prüfstecker, kann vorteilhaft der Zustand der Buchse von einer Messanordnung aus detektiert bzw. überwacht werden.

In beispielhaften Ausführungsformen kann die Buchse genau zwei Detektorelemente aufweisen, die konfiguriert sind von einem Prüfstecker elektrisch kontaktiert zu werden, wobei beispielsweise ein Strom oder eine Spannung zwischen den Detektorelementen detektiert wird, eine induktive Messung, und/oder eine kapazitive Messung zwischen den Detektorelementen erfolgt.

In weiteren beispielhaften Ausführungsformen kann ein einzelnes Detektorelement oder kann eine Mehrzahl von Detektorelementen konfiguriert sein, von einem einzelnen Prüfstecker elektrisch kontaktiert zu werden. Weiterhin kann eine Mehrzahl von Detektorelementen konfiguriert sein, von mehreren Prüfsteckern kontaktiert zu werden, wobei jeder Prüfstecker ein Detektorelement oder mehrere Detektorelemente elektrisch kontaktieren kann.

Mittels des einen oder der mehreren Detektorelemente kann ein Zustand der Buchse detektiert werden. Ein Zustand kann dabei zumindest eines von einer Wandstärke der Buchse, einer Porosität der Buchse, oder einer bestimmten elastischen Eigenschaft der Buchse umfassen. Der Zustand der Buchse kann dabei beispielhaft sowohl elektrisch und/oder kapazitiv und/oder induktiv detektierbar sein.

Beispielsweise kann ein Detektorelement zusammen mit einer in der Buchse drehbar gelagerten Welle einen Kondensator bilden, wobei die Buchse bzw. ein Abschnitt der Buchse im Wesentlichen als Trennmittel der Kondensatorelemente wirkt. Bei Abnutzung oder Verschleiß der Buchse bzw. des Abschnitts der Buchse, also des Trennmittels, ändert sich die Kapazität des gebildeten Kondensators, was mittels des Detektorelements detektiert werden kann. Zusätzlich oder alternativ kann beispielsweise eine Spannung oder eine Stromstärke zwischen zwei Detektorelementen detektiert werden, welche sich in Abhängigkeit der Wandstärke und/oder der Porosität und/oder einer elastischen Eigenschaft der Buchse bzw. des Abschnitts der Buchse ändert. Weiterhin zusätzlich oder alternativ können mehrere Detektorelemente zueinander einen oder mehrere Kondensatoren bilden, dessen bzw. deren Kapazitäten sich in Abhängigkeit der Wandstärke und/oder der Porosität und/oder einer elastischen Eigenschaft der Buchse bzw. des Abschnitts der Buchse ändert.

In bevorzugten Ausführungsformen der Buchse kann die Buchse ein Gleitelement aufweisen, welches einer in der Buchse zu lagernden Welle zugewandt ist, und die Buchse ein Halteelement aufweisen, welches zumindest abschnittsweise radial außerhalb des Gleitelements angeordnet ist.

Mit anderen Worten kann die Buchse insbesondere ein Gleitelement aufweisen, welches konfiguriert, ist eine Welle gleitend drehbar zu lagern, und ein Halteelement aufweisen, welches das Gleitelement zumindest abschnittsweise radial umgreift bzw. umfängt. Die Buchse kann dabei konfiguriert sein, mittels des Halteelements starr in einem Gleitlager bzw. einem Gehäuse eines Gleitlagers angeordnet zu sein, so dass sich das Gleitelement nicht mit der darin zu lagernden Welle dreht.

Das Gleitelement kann insbesondere eine Schicht bilden, welche gegenüber der in der Buchse zu lagernden Welle eine besonders geringe Gleitreibung aufweist. Gleichzeitig kann das Halteelement besonders starr und/oder steif ausgeführt sein, um eine stabile Festlegung, und insbesondere eine drehfeste Festlegung der Buchse in dem Gleitlager zu ermöglichen.

Somit kann durch die mehrschichtige Ausführung der Buchse, insbesondere die in radialer Richtung mehrschichtige Ausführung der Buchse, eine Buchse mit vorteilhaften Eigenschaften zur gleitenden Lagerung einer Welle, und zur drehfesten Festlegung der Buchse in einem Gleitlager bereitgestellt werden.

In beispielhaften Ausführungsformen der Buchse, kann die Buchse, und insbesondere das Gleitelement, einen Innendurchmesser im Bereich von etwa 10 mm bis etwa 500 mm aufweisen, ist darauf jedoch nicht beschränkt. Weiterhin kann das Gleitelement insbesondere eine Wandstärke im Bereich von etwa 0,2 mm bis etwa 60 mm aufweisen, bevorzugt im Bereich von etwa 1 mm bis etwa 20 mm aufweisen.

In bevorzugten Ausführungsformen der Buchse können das Gleitelement und/oder das Halteelement elektrische Isolatoren sein.

Mit anderen Worten kann insbesondere die Buchse abschnittsweise oder ganz ein elektrischer Isolator sein.

Vorzugsweise ermöglicht die Buchse, wobei das Gleitelement und/oder das Halteelement ein elektrischer Isolator ist, dass ein Zustand der Buchse durch elektrisches Kontaktieren des Detektorelements sehr fein bzw. genau detektiert werden kann. Indem das Gleitelement und/oder das Halteelement elektrische Isolatoren sind, wirken sich Änderungen im Zustand der Buchse, also im Zustand des Gleitelements und/oder des Halteelements, besonders stark auf elektrisch detektierbare Eigenschaften, wie z.B. Kapazität oder Stromfluss aus.

Im beispielhaften Fall der Lagerung einer metallischen Welle in einem polymeren Gleitelement, kann sich eine Änderung der Wandstärke des Gleitelements besonders stark auf eine messbare Stromstärke zwischen zwei Detektorelementen auswirken, oder beispielhaft auch auf den kapazitiven Wert auswirken, welcher an dem Gleitelement detektiert werden kann.

In beispielhaften Ausführungsformen der Buchse können das Gleitelement und/oder das Halteelement aus einem Polymer gebildet sein bzw. ein Polymer aufweisen. Beispielhaft können das Gleitelement und/oder das Halteelement Kunststoff, wie beispielsweise PTFE, PA, PP, PE, EP, PMMA, PEEK oder PUR aufweisen bzw. daraus bestehen, oder optional insbesondere einen faserverstärkten Kunststoff, wie PTFE, PA, PP, PE, EP, PMMA, PEEK, PUR mit einem Kohle-, Aramid-, oder Glasfaseranteil im Bereich von 0,1% bis 40% aufweisen bzw. daraus bestehen.

In weiteren beispielhaften Ausführungsformen der Buchse können das Gleitelement und/oder das Halteelement aus einem keramischen Werkstoff gebildet sein bzw. einen keramischen Werkstoff umfassen. Beispielhaft können das Gleitelement und/oder das Halteelement eine technische Keramik, wie beispielsweise Siliziumkarbid, Borkarbid, Bornitrid, oder kohlenstofffaserverstärkter Kohlenstoff aufweisen bzw. daraus bestehen.

Insbesondere kann das Halteelement einen elektrisch stärker isolierenden Werkstoff aufweisen bzw. daraus bestehen, als das Gleitelement. Dadurch wird ermöglicht, dass gezielt die Eigenschaften bzw. der Zustand des Gleitelements detektiert werden können.

In alternativen Ausführungsformen kann zumindest eines von dem Gleitelement und dem Halteelement einen metallischen Werkstoff aufweisen bzw. daraus bestehen. Beispielsweise kann zumindest eines von dem Gleitelement und dem Halteelement Blei, Zinn, Bronze, Aluminium, Stahl oder einen anderen metallischen Werkstoff aufweisen bzw. daraus bestehen.

In bevorzugten Ausführungsformen der Buchse können zwei oder mehr Detektorelemente an einer radial äußeren Seite des Gleitelements angeordnet sein, und das Halteelement zumindest eine Öffnung aufweisen, so dass die zwei oder mehr Detektorelemente mittels eines Prüfsteckers, durch die zumindest eine Öffnung hindurch, elektrisch kontaktierbar sind.

Mit anderen Worten kann das zumindest eine Detektorelement an einer Außenumfangsseite des Gleitelements angeordnet sein. Darüber hinaus kann das Halteelement zumindest eine Öffnung aufweisen, wohindurch das zumindest eine Detektorelement mittels eines oder mehrerer Prüfstecker elektrisch kontaktierbar ist.

Vorteilhafterweise ermöglicht das Detektorelement, welches an einer radial äußeren Seite des Gleitelements angeordnet ist, dass insbesondere der Zustand des Gleitelements der Buchse detektiert werden kann.

Für den beispielhaften Fall der Lagerung einer metallischen Welle in einem polymeren oder keramischen Gleitelement, würde insbesondere ein Zustand in dem das Gleitelement aufgebraucht ist, also das Gleitelement fast keine bzw. keine Wandstärke mehr aufweist, ein maximaler oder minimaler Wert bei einer elektrischen oder kapazitiven Messung detektierbar sein. Bei Detektion einer kritischen Wandstärke oder einer nahezu kritischen Wandstärke des Gleitelements, kann auf Basis der Detektion mittels des elektrisch kontaktierenden Prüfsteckers ein Messsignal ausgegeben werden, welches beliebig umgewandelt werden kann, um einen notwendigen Austausch des Gleitelements, der Buchse oder des gesamten Gleitlagers anzuzeigen. Ein Messsignal bzw. ein Ausgabesignal auf Basis des Messsignals kann beispielsweise ein akustisches oder optisches Signal, wie ein Warnton, eine Lampe, eine Schrift auf einem Display oder eine Ausgabe an eine graphische Benutzeroberfläche sein.

Dadurch, dass das Halteelement Öffnungen aufweist, wohindurch das zumindest eine Detektorelement elektrisch kontaktierbar ist, kann sich die Detektion insbesondere auf das Gleitelement beziehen und unterliegt nur geringfügigen bzw. keinen Verfälschungen durch das Halteelement.

Durch die Anordnung zweier oder mehrerer Detektorelemente an einer radial äußeren Seite des Gleitelements, kann ein Zustand der Buchse, und insbesondere ein Zustand des Gleitelements, durch Verwendung mehrerer Detektorelemente detektiert werden. So kann ein Zustand beispielsweise durch die Leitfähigkeit des Detektorelements zwischen zwei Detektorelementen detektiert werden.

Gleichermaßen kann ein kapazitiver Abgleich zwischen zwei oder mehreren Detektorelementen erfolgen. Zusätzlich können Zustände an mehreren Abschnitten der Buchse bzw. des Gleitelements detektiert werden, so dass ein Vergleich zwischen den Zuständen an geometrisch verschiedenen Abschnitten der Buchse bzw. des Gleitelements ermöglicht wird.

Beispielsweise kann ein Detektorelement zusammen mit einer in dem Gleitelement drehbar gelagerten Welle einen Kondensator bilden, wobei das Gleitelement und ggf. ein Bereich des Halteelements im Wesentlichen als Trennmittel, das heißt als dielektrisches Medium der Kondensatorelemente wirkt. Bei Abnutzung oder Verschleiß des Gleitelements, also des Trennmittels, ändert sich die Kapazität des gebildeten Kondensators, was mittels des Detektorelements detektiert werden kann. Zusätzlich oder alternativ kann beispielsweise eine Spannung oder eine Stromstärke zwischen zwei Detektorelementen detektiert werden, welche sich in Abhängigkeit der Wandstärke und/oder der Porosität und/oder einer elastischen Eigenschaft der des Gleitelements ändert. Weiterhin zusätzlich oder alternativ können mehrere Detektorelemente zueinander einen oder mehrere Kondensatoren bilden, dessen bzw. deren Kapazitäten sich in Abhängigkeit der Wandstärke und/oder der Porosität und/oder einer elastischen Eigenschaft des Gleitelements ändert.

Insbesondere kann eine Mehrzahl von Detektorelementen paarweise an der radial äußeren Seite des Gleitelements angeordnet sein, wobei ein erstes Paar von Detektorelementen beispielsweise diametral, also gegenüberliegend bzgl. der Achse der Buchse, zu einem zweiten Paar von Detektorelementen angeordnet sein kann. Die Detektorelemente eines Paares von Detektorelementen können beispielsweise sowohl im Wesentlichen in axialer Richtung des Gleitelements, als auch im Wesentlichen in Umfangsrichtung des Gleitelements, zueinander beabstandet angeordnet sein. Weiterhin können die Detektorelemente eines jeweiligen Paares von Detektorelementen konfiguriert sein, von einem einzelnen Prüfstecker elektrisch kontaktierbar zu sein. Dazu kann der Prüfstecker insbesondere ein Paar von Prüfkontakten aufweisen, so dass jedes Detektorelement eines Paares von Detektorelementen von einem Prüfkontakt eines Prüfsteckers elektrisch kontaktierbar ist.

Die zumindest eine Öffnung des Halteelements kann sich beispielsweise im Wesentlichen radial erstrecken, ist jedoch nicht darauf beschränkt.

In beispielhaften Ausführungsformen kann das Halteelement konfiguriert sein, das Gleitelement so zu umgreifen, dass das Gleitelement nicht-drehbar bzw. drehfest radial innerhalb des Halteelement angeordnet ist. Weiterhin kann das Halteelement selbst konfiguriert sein drehfest in einem Gehäuse festlegbar zu sein. Mittels der zumindest einen Öffnung des Halteelements kann somit das zumindest eine Detektorelement wiederholgenau mit einem Prüfstecker elektrisch kontaktierbar sein.

Das zumindest eine Detektorelement weist einen in radialer Richtung elastisch rückstellfähigen Kontaktabschnitt auf.

Vorteilhafterweise ermöglicht das zumindest eine Detektorelement, welches einen in radialer Richtung elastisch rückstellfähigen Kontaktabschnitt aufweist, dass ein zuverlässiges elektrisches Kontaktieren des zumindest einen Detektorelements mit einem Prüfstecker sichergestellt werden kann.

Insbesondere ermöglicht der elastisch rückstellfähige Kontaktabschnitt des zumindest einen Detektorelements, dass der elastisch rückstellfähigen Kontaktabschnitt sich bei einem elektrischen Kontaktieren mit einem Prüfstecker, elastisch verformt, während ein elektrischer Kontakt zwischen dem Prüfstecker und dem Detektorelement erhalten bleibt. Insbesondere kann aufgrund des rückstellfähigen Kontaktabschnitts, der sich federnd verformt, ein Kontakt zwischen Prüfstecker bzw. Prüfkontakten des Prüfsteckers und Detektorelement mit einer vorbestimmten Kontaktkraft sichergestellt werden.

Somit können vorteilhafterweise Schäden sowohl am Detektorelement, als auch an einem Prüfstecker zur elektrischen Kontaktierung des Detektorelements, vermieden werden, während gleichzeitig eine vorbestimmte elektrische Kontaktierung zwischen Prüfstecker und Detektorelement mit einer vorbestimmten Kontaktkraft sichergestellt wird.

In beispielhaften Ausführungsformen kann das zumindest eine Detektorelement bzgl. weiterer Richtungen als der radialen Richtung oder anderen Richtungen als der radialen Richtung einen rückstellfähigen Kontaktabschnitt aufweisen. Weiterhin kann das zumindest eine Detektorelement mehrere rückstellfähige Kontaktabschnitte aufweisen.

In bevorzugten Ausführungsformen der Buchse kann das zumindest eine Detektorelement ein Metallplättchen sein.

Beispielsweise kann das zumindest eine Detektorelement ein Kupferplättchen, ein verzinktes Eisenplättchen oder ein anderes elektrisch kontaktierbares Metallplättchen sein. Sind mehrere Detektorelemente an der Buchse angeordnet, so können die mehreren Detektorelemente ähnliche bzw. gleiche Metallplättchen sein, oder voneinander verschiedene Metallplättchen sein.

Vorteilhafterweise ermöglicht die Ausführung des zumindest einen Detektorelements als Metallplättchen, den Zustand der Buchse, insbesondere den Zustand eines Gleitelements der Buchse, auf passive Weise zu detektieren, so dass das Detektorelement selbst unsensibel gegenüber einer Änderung des Zustands der Buchse ist.

Darüber hinaus ermöglicht die Ausführung des zumindest einen Detektorelements als Metallplättchen, dass eine besonders einfache und kostengünstige Buchse für ein Gleitlager bereitgestellt wird, wobei verschiedene Zustände der Buchse detektiert werden können und die Anwendung nicht auf die Detektion eines bestimmten Zustands limitiert ist.

Insbesondere kann das zumindest eine Detektorelement ein gebogenes Metallplättchen sein, wobei beispielsweise ein Anbindungsabschnitt des Detektorelements radial einwärts der Buchse zugewandt ist, und ein elastisch rückstellfähiger Kontaktabschnitt des Detektorelements sich radial nach außen, schräg von dem Anbindungsabschnitt, weg erstreckt.

In alternativen Ausführungsformen kann des zumindest eine Detektorelement als aktives Detektorelement zur Detektion einer spezifischen Messgröße konfiguriert sein. Beispielsweise kann das zumindest eines Detektorelement einen RFID Chip aufweisen, welcher insbesondere in dem Detektorelement eingebettet sein kann bzw. von dem Detektorelement komplett umhüllt sein kann.

Das Detektorelement kann beispielsweise eine Wandstärke im Bereich von etwa 0,1 mm bis etwa 3,0 mm, vorzugsweise im Bereich von etwa 0,3 mm bis etwa 1,5 mm aufweisen. Weiterhin kann sich ein elastisch rückstellfähiger Kontaktabschnitt des Detektorelements, in einem beispielhaften Zustand, wobei das Detektorelement nicht durch einen Prüfstecker kontaktiert ist, im Bereich von etwa 1,0 mm bis etwa 10 mm radial nach außen erstrecken. Weiterhin beispielhaft kann das Detektorelement beispielsweise eine Seitenlänge im Bereich von etwa 0,5 mm bis etwa 20 mm aufweisen, bevorzugt im Bereich von etwa 3 mm bis etwa 10 mm aufweisen. Die Geometrie des Detektorelements ist nicht auf die oben angegebenen Maße beschränkt. Beispielsweise kann das Detektorelement geometrisch im Verhältnis zur Buchse, und insbesondere im Verhältnis zum Gleitelement der Buchse ausgebildet sein, wobei das Detektorelement beispielsweise eine Wandstärke im Bereich von etwa 0,1 % bis etwa 2 % des Außendurchmessers der Buchse bzw. des Gleitelements aufweisen, ein elastisch rückstellfähiger Kontaktabschnitt des Detektorelements, in einem beispielhaften Zustand, wobei das Detektorelement nicht durch einen Prüfstecker kontaktiert ist, im Bereich von etwa 1 % bis etwa 10 % mm des Außendurchmessers der Buchse bzw. des Gleitelements aufweisen radial außen erstrecken, und eine Seitenlänge im Bereich von etwa 0,1 % bis etwa 5 % des Außendurchmessers der Buchse bzw. des Gleitelements aufweisen.

Ein weiterer Aspekt der Erfindung betrifft ein Gleitlager umfassend:
- eine Buchse nach einem der vorangehenden Aspekte, sowie bevorzugten, beispielhaften und/oder alternativen Ausführungsformen; und
- ein Gehäuse in welchem die Buchse austauschbar oder nicht-austauschbar angeordnet ist.

Mit anderen Worten kann in beispielhaften Ausführungsformen das vorliegende Gleitlager so konfiguriert sein, dass eine Buchse austauschbar darin angeordnet ist. In alternativen Ausführungsformen dagegen kann das vorliegende Gleitlager so konfiguriert sein, dass eine Buchse nicht-austauschbar darin angeordnet ist.

Die vorstehend beschriebenen Aspekte, sowie bevorzugten, beispielhaften und/oder alternativen Ausführungsformen der Buchse für ein Gleitlager und deren Effekte beziehen sich gleichermaßen auf das Gleitlager umfassend eine Buchse und ein Gehäuse in welchem die Buchse austauschbar oder nicht-austauschbar angeordnet ist.

Vorteilhafterweise ermöglicht eine austauschbare Anordnung der Buchse in dem Gehäuse des Gleitlagers, dass die Buchse, sobald sie ihre maximale Nutzungsdauer im Einsatz erreicht hat, ausgetauscht werden kann. Folglich kann mittels einer austauschbaren Anordnung der Buchse in dem Gleitlager eine kostengünstige und ressourcenschonende langfristige Gleitlagerung bereitgestellt werden.

Daneben ermöglicht eine nicht-austauschbare Anordnung der Buchse in dem Gehäuse eines Gleitlagers, dass die Buchse besonders starr in dem Gehäuse des Gleitlagers fixiert werden kann, so dass eine besonders zuverlässige elektrische Kontaktierung eines an der Buchse angeordneten Detektorelements mittels eines Prüfsteckers sichergestellt werden kann.

In beispielhaften Ausführungsformen kann die Buchse mittels eines Bajonettverschlusses oder eines Festlegungsflansches in bzw. an dem Gehäuse austauschbar angeordnet sein.

Demgegenüber kann die Buchse in alternativen Ausführungsformen durch Verklemmen, Verrasten oder Verkleben nicht-austauschbar in bzw. an dem Gehäuse austauschbar angeordnet sein.

In bevorzugten Ausführungsformen des Gleitlagers kann das Gehäuse zumindest eine Aufnahmeöffnung aufweisen, um einen Prüfstecker, welcher konfiguriert ist, das zumindest eine Detektorelement elektrisch zu kontaktieren, bereichsweise aufzunehmen, und der Prüfstecker in der zumindest einen Aufnahmeöffnung zu dem zumindest einen Detektorelement führbar sein, und/oder in der zumindest einen Aufnahmeöffnung festlegbar sein.

Durch die Aufnahmeöffnung mittels welcher der Prüfstecker führbar und/oder festlegbar ist, wird vorteilhaft ermöglicht, dass eine zuverlässige elektrische Kontaktierung des zumindest einen Detektorelements mit dem Prüfstecker sichergestellt wird.

In beispielhaften Ausführungsformen kann die Aufnahmeöffnung zumindest abschnittsweise konisch oder angeschrägt geformt sein, um den Prüfstecker gezielt hin zum Detektorelement zu führen. Darüber hinaus kann die Aufnahmeöffnung eine Codierung zur Ausrichtung des Prüfsteckers aufweisen, damit der Prüfstecker in einer vorbestimmten Ausrichtung zu dem Detektorelement führbar ist.

In weiteren beispielhaften Ausführungsformen kann die Aufnahmeöffnung Verriegelungselemente aufweisen, insbesondere eine Bajonettaufnahme oder ein Gewinde aufweisen, um den Prüfstecker in der Aufnahmeöffnung festzulegen, und so eine wiederholgenaue elektrische Kontaktierung des Detektorelements durch den Prüfstecker zu ermöglichen.

Beispielsweise kann mittels der Aufnahmeöffnung ein Schaft des Prüfsteckers im Gehäuse verschraubbar sein. Weiterhin kann der Prüfstecker konfiguriert sein verriegelbar und/oder lösbar in der Aufnahmeöffnung angeordnet zu sein bzw. zu werden, indem der Prüfstecker einen zur Aufnahmeöffnung komplementären Festlegungsabschnitt aufweist. Mit anderen Worten kann ein Prüfstecker insbesondere reversibel, also wiederlösbar, in der Aufnahmeöffnung des Gehäuses festlegbar sein. Beispielsweise kann ein Prüfstecker mit der Aufnahmeöffnung eine Push-Pull Konfiguration bilden zur wiederlösbaren Festlegung des Prüfsteckers in der Aufnahmeöffnung.

Ein weiterer Aspekt der Erfindung betrifft eine Gleitlagermessanordnung umfassend.
- ein Gleitlager gemäß der vorangehenden Beschreibung; und
- zumindest einen Prüfstecker, wobei der zumindest eine Prüfstecker das zumindest eine Detektorelement elektrisch kontaktiert.

Insbesondere kann der Prüfstecker konfiguriert sein mit einer Steuereinheit verbunden zu werden bzw. zu sein, um den Zustand der Buchse, und insbesondere den Zustand eines Gleitelements der Buchse, zu detektieren und auszugeben. Mit anderen Worten kann der Prüfstecker konfiguriert sein mit einer Steuereinheit verbunden zu werden, welche konfiguriert ist zum Messen, Auswerten und Ausgeben eines detektierten Zustands der Buchse bzw. eines Zustands eines Gleitelements der Buchse.

Die vorstehend beschriebenen Aspekte, sowie bevorzugten, beispielhaften und/oder alternativen Ausführungsformen der Buchse für ein Gleitlager und des Gleitlagers sowie deren Effekte beziehen sich gleichermaßen auf die Gleitlagermessanordnung umfassend ein Gleitlager Buchse und zumindest einen Prüfstecker, welcher das zumindest eine Detektorelement elektrisch kontaktiert.

Ein weiterer Aspekt der Erfindung betrifft ein Verfahren zum Bestimmen der Abnutzung einer Buchse eines Gleitlagers, umfassend die Schritte:
- elektrisches Kontaktieren zumindest eines Detektorelements der Buchse mit einem Prüfstecker, wobei das zumindest eine Detektorelement einen in radialer Richtung elastisch rückstellfähigen Kontaktabschnitt zum elektrischen Kontaktieren mit einem Prüfkontakt des Prüfsteckers aufweist, wobei sich der elastisch rückstellfähige Kontaktabschnitt in radialer Richtung nach außen erstreckt;
- Messen eines Zustands der Buchse mittels des Prüfsteckers, welcher das zumindest eine Detektorelement elektrisch kontaktiert; und
- Ausgeben eines Messsignals auf Basis des detektierten Zustands der
Buchse.

Die Ausgabe eines Messsignals auf Basis des detektierten Zustands der Buchse kann insbesondere die Ausgabe eines akustischen und/oder optischen Signals umfassen. Beispielhaft kann ein Warnsignal ertönen, sobald ein Zustand als ein möglicher kritischer Zustand der Buchse detektiert wird. Zusätzlich oder alternativ kann eine Lampe mit einer bestimmten Farbe aufleuchten, oder ein Warnhinweis oder eine Textnachricht auf einem Display ausgegeben werden, sobald ein Zustand als ein möglicher kritischer Zustand der Buchse detektiert wird. Alternativ oder zusätzlich kann ein Hinweis an eine interne Ein- und Ausgabeeinheit einer Steuereinheit und/oder an ein externes Gerät, wie einen Rechner oder ein Smartphone ausgegeben werden, beispielsweise via Email.

Darüber hinaus können insbesondere auch kritische Änderungen eines Zustands, auch wenn ein kritischer Zustand selbst noch nicht eingetreten ist, durch die Bewertung der Änderung eines Zustands über eine vorbestimmte Zeit, als Hinweis ausgegeben werden.

Weiterhin kann die Ausgabe eines Messsignal auf Basis des detektierten Zustand insbesondere die Ausgabe eines Absolutzustands umfassen, oder die Ausgabe eines relativen Zustand umfassen, wie beispielsweise eine erwartete restliche Nutzungsdauer auf Basis des detektierten Zustands und der Änderung mehrerer detektierter Zustände über eine vorbestimmte Zeit hinweg.

Die vorstehend beschriebenen Aspekte, sowie bevorzugten, beispielhaften und/oder alternativen Ausführungsformen der Buchse für ein Gleitlager, des Gleitlagers und der Gleitlagermessanordnung sowie deren Effekte beziehen sich gleichermaßen auf das Verfahren zum Bestimmen der Abnutzung einer Buchse eines Gleitlagers.

In weiteren beispielhaften Ausführungsformen kann das Verfahren zum Bestimmen der Abnutzung einer Buchse eines Gleitlagers einen Schritt zur Kalibrierung einer Gleitlagermessanordnung, umfassen.

Insbesondere kann der Schritt Kalibrierung einer Gleitlagermessanordnung vor den weiteren Schritten durchgeführt werden, und vor der Nutzung des Gleitlagers zur gleitenden Lagerung einer Welle.

Der Schritt der Kalibrierung einer Messanordnung kann auf Basis von Simulationen und/oder Tests erfolgen, wobei einem bestimmten Zustand einer Buchse, wie beispielsweise eine Wandstärke der Buchse, eine Porosität der Buchse, oder eine elastische Eigenschaft der Buchse, ein bestimmtes detektierbares Messsignal zugeordnet wird, wie beispielsweise eine bestimmte Stromstärke, eine bestimmte Spannung oder eine bestimmte Kapazität. Bei der Kalibrierung der Gleitlagermessanordnung können insbesondere kritische Zustände der Buchse definiert werden, anhand derer eine bestimmte Ausgabe erfolgt, und anhand derer beispielsweise ein durchzuführender Austausch der Buche des Gleitlagers bzw. des Gleitlagers angezeigt wird.

Im Folgenden werden Ausführungsformen der Erfindung anhand der beiliegenden Figuren näher beschrieben. Es versteht sich, dass die vorliegende Erfindung nicht auf diese Ausführungsformen beschränkt ist. Die beanspruchte Erfindung ist durch die beigefügten Ansprüche definiert.

Es zeigt:
- Figur 1: eine Darstellung einer Buchse für ein Gleitlager in Schrägansicht;
- Figur 2: eine Schnittdarstellung der Buchse;
- Figur 3: eine Darstellung eines Gehäuses eines Gleitlagers; und
- Figur 4: ein Flussdiagramm eines Verfahrens zum Bestimmen der Abnutzung einer Buchse eines Gleitlagers.

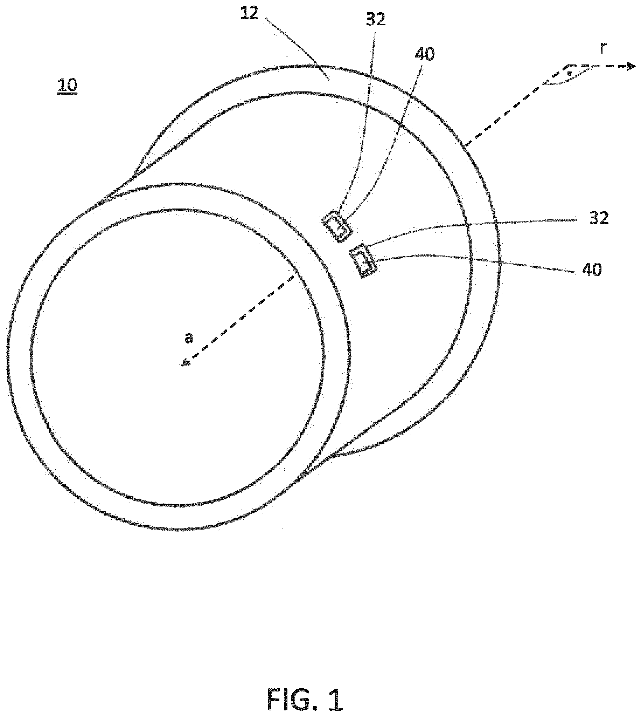

Fig. 1 zeigt eine Buchse 10 für ein Gleitlager, welches beispielhaft konfiguriert sein kann eine Welle drehbar zu lagern. Wie in Fig. 1 gezeigt, kann die Buchse 10 eine im Wesentlichen zylindrische Form aufweisen, wobei mit a eine axiale Richtung der Buchse 10 bezeichnet ist, und mit r eine radiale Richtung der Buchse 10 bezeichnet ist.

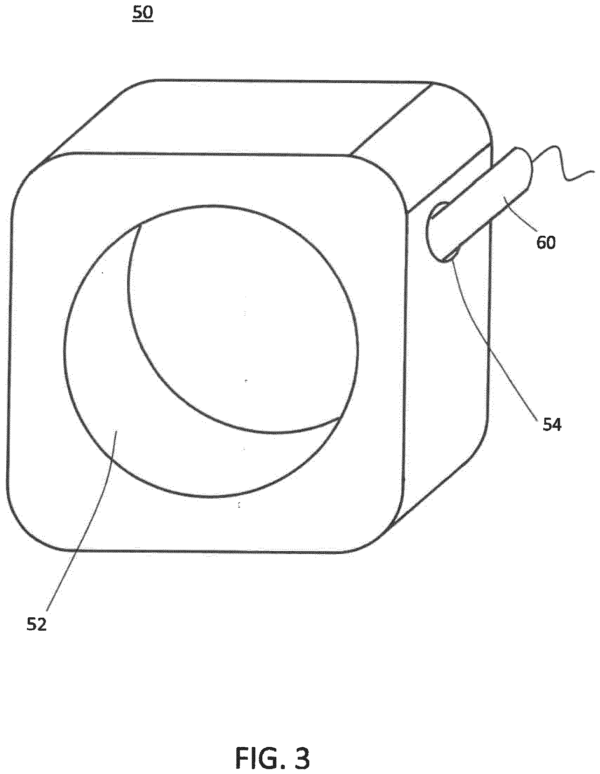

Ferner kann die Buchse 10, insbesondere an einem axialen Ende der Buchse 10, beispielhaft einen Flansch 12 aufweisen, wobei die Buchse 10 beispielhaft mittels des Flansches 12 an einem Gehäuse 50, wie in Fig. 3 gezeigt, festlegbar ist. Die Festlegung kann beispielsweise mittels Verschrauben, Vernieten, Verkleben, Verschweißen oder ähnlichem erfolgen. Dabei kann die Buchse 10 sowohl reversibel an bzw. in dem Gehäuse 50 festgelegt werden oder auch irreversibel an dem Gehäuse 50 festgelegt werden. Die Festlegung der Buchse 10 an bzw. in dem Gehäuse 50 kann insbesondere drehfest bzw. verdrehsicher erfolgen, so dass sich die Buchse 10 gegenüber dem Gehäuse 50 nicht verdreht. Insbesondere kann die Buchse 10 so an bzw. in dem Gehäuse 50 festgelegt sein, dass sich selbst bei einer drehbaren Lagerung einer Welle in der Buchse 10 mit einer hohen Drehzahl, sich die Buchse 10 nicht dreht.

Wie in Fig. 1 weiterhin gezeigt, können mehrere Detektorelemente 40 an der Buchse 10 angeordnet sein. Jedes Detektorelement 40 kann dabei in einer Öffnung 32 der Buchse 10 angeordnet sein, wobei die Öffnung 32 größer ist als das darin angeordnete Detektorelement 40.

Wie ebenfalls in Fig. 1 gezeigt, kann ein Paar von Detektorelementen 40 benachbart zueinander angeordnet sein. Insbesondere kann ein Paar von Detektorelementen 40 in Umfangsrichtung der Buchse 10 beabstandet zueinander angeordnet sein, so dass beide Detektorelemente 40 mittels eines einzelnen Prüfsteckers 60 (in Fig. 1 nicht gezeigt) kontaktierbar sind. Ein Prüfstecker 60 kann dabei im Wesentlichen radialer Richtung r hin zu den Detektorelementen 40 führbar sein, um diese elektrisch zu kontaktieren.

In beispielhaften Ausführungsformen kann eine Vielzahl von Detektorelementen 40, wie beispielsweise eines, zwei, drei, vier, fünf, sechs, sieben, acht, neun, zehn, elf oder zwölf Detektorelemente 40 an der Buchse 10 angeordnet sein. Alternativ kann eine beliebige andere Zahl von Detektorelementen 40 an der Buchse 10 angeordnet sein, um einen oder mehrere Zustände der Buchse 10 zu detektieren. Mittels einer Vielzahl von Detektorelementen 40 kann vorteilhaft ein Zustand der Buchse 10, insbesondere eine Abnutzung bzw. ein Verschleiß der Buchse 10, an verschiedenen Stellen der Buchse 10 detektiert werden. Insbesondere kann die Vielzahl von Detektorelementen 40 zeitlich nacheinander mit einem einzelnen Prüfstecker 60 elektrisch kontaktiert werden oder zeitlich parallel, das heißt zeitgleich, mittels mehrerer Prüfstecker 60 elektrisch kontaktiert werden, um einen Zustand der Buchse 10 an verschiedenen Stellen der Buchse 10 zu detektieren.

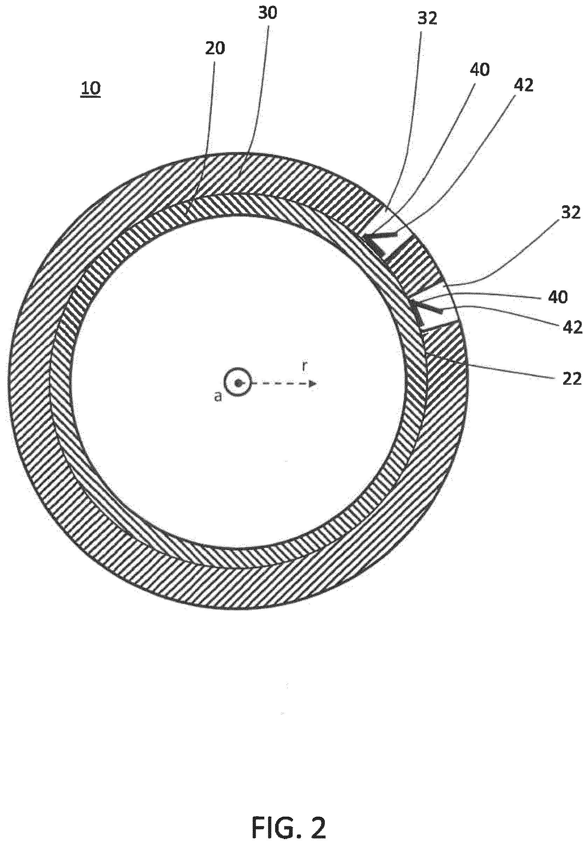

Fig. 2 zeigt einen beispielhaften Querschnitt entlang einer radialen Richtung der Buchse 10, beispielhaft an einer axialen Position der Buchse 10, an der zwei Detektorelemente 40 angeordnet sind.

Wie in Fig. 2 gezeigt können zwei Detektorelemente 40 in Umfangsrichtung der Buchse 10 zueinander beabstandet angeordnet sein. In alternativen Ausführungsformen können zwei oder mehr Detektorelemente 40 in anderen Richtungen zueinander beabstandet angeordnet sein, wie beispielsweise in axialer Richtung a oder diagonal entlang des Umfangs der Buchse 10.

Wie weiterhin in Fig. 2 gezeigt kann die Buchse 10 mehrschichtig aufgebaut sein. Beispielsweise kann die Buchse 10 integral aus mehreren Schichten hergestellt sein oder durch Ineinanderstecken eines inneren Elements in eines oder mehrere äußere Elemente hergestellt sein.

Insbesondere kann die Buchse 10 ein Gleitelement 20 aufweisen, welches beispielhaft eine im Wesentliche zylindrische Form aufweist, und an einer radial inneren Seite der Buchse 10 angeordnet ist. Das Gleitelement 20 kann insbesondere konfiguriert sein eine Welle (nicht gezeigt), wie beispielsweise für eine Maschine, gleitend drehbar zu lagern. Weiterhin kann die Buchse 10 ein Halteelement 30 aufweisen, welches beispielhaft eine im Wesentlichen zylindrische Form aufweist, und an einer radial äußeren Seite der Buchse 10 angeordnet ist. Insbesondere kann das Halteelement 30 das Gleitelement 20 radial zumindest abschnittsweise umgreifen.

Weiterhin kann, wie in Fig. 2 gezeigt, das Halteelement 30 mehrere Öffnungen 32 aufweisen, um beispielhaft je Öffnung 32 ein Detektorelement 40 darin anzuordnen. Die Öffnungen 32 können sich dabei im Wesentlichen in radialer Richtung r erstrecken, so dass das eine oder die mehreren Detektorelemente 40 im Wesentlichen in radialer Richtung r mittels eines Prüfsteckers 60 elektrisch kontaktierbar sind.

Wie in Fig. 2 gezeigt, können die Detektorelemente 40 an einer radial äußeren Umfangsseite des Gleitelements 20 angeordnet sein. Darüber hinaus können die Detektorelemente 40 auch in Nuten des Gleitelements 20 angeordnet sein, wobei die Nuten gegenüber der radial äußeren Umfangsseite des Gleitelements 20 nach radial innen um einen vorbestimmten Wert zurückspringen. Eine Nut kann dabei insbesondere um einen Wert von etwa 0,01 mm bis etwa 1 mm, bevorzugt im Bereich von etwa 0,02 mm bis etwa 0,5 mm, und besonders bevorzugt im Bereich von etwa 0,05 mm bis etwa 0,1 mm, gegenüber der radial äußeren Umfangsseite des Gleitelements 20 radial nach innen zurückspringen. Die Anordnung des einen oder der mehreren Detektorelemente 40 in radial einwärts zurückspringenden Nuten des Gleitelements 20 ermöglicht einen kritischen Zustand der Buchse 10 bzw. des Gleitelements 20 frühzeitig und an verschiedenen Stellen der Buchse 10 zu detektieren.

Wie in Fig. 2 gezeigt, ist das eine oder sind die mehreren Detektorelemente 40 mit einem elastisch rückstellfähigen Kontaktabschnitt 42 versehen, der sich bei einer Kontaktierung mit einem Prüfkontakt eines Prüfsteckers 60 elastisch verformen kann, insbesondere elastisch radial einwärts verformen kann.

Der elastisch rückstellfähige Kontaktabschnitt 42 eines Detektorelements 40 kann dabei so ausgerichtet sein, dass er sich bei einer radial einwärts gerichteten elastischen Verformung im Wesentlichen in radialer Richtung r und in Umfangsrichtung verformt, und/oder im Wesentlichen in radialer Richtung r und in axialer Richtung a verformt.

Beispielhaft, und wie in Fig. 2 angedeutet, kann das eine bzw. die mehreren Detektorelemente 40 als gebogenes Metallplättchen ausgebildet sein, so dass das Detektorelement 40 federnd konfiguriert ist, und integral mit der Funktion der elastischen Rückstellfähigkeit konfiguriert ist.

In alternativen Ausführungsformen kann das Detektorelement 40 ein flaches Metallplättchen sein, insbesondere ein ungebogenes flaches Metallplättchen sein. In einer solchen Ausführungsform ist es vorteilhaft, wenn der Prüfstecker 60 elastisch rückstellfähige Prüfkontakte zur elektrischen Kontaktierung des einen bzw. der mehreren Detektorelemente 40 aufweist.

Folglich können auf beide Weisen eine zuverlässige elektrische Kontaktierung des einen bzw. der mehreren Detektorelemente 40 mit einem Prüfstecker 60 realisiert werden.

Fig. 3 zeigt eine Darstellung eines Gehäuses 50 eines Gleitlagers. Das Gehäuse 50 kann eine beliebige Form aufweisen und insbesondere konfiguriert sein festlegbar bzw. fixierbar zu sein, um eine sichere Lagerung, wie beispielsweise für eine Maschinenwelle, bereitzustellen.

Wie in Fig. 3 gezeigt, kann das Gehäuse 50 insbesondere eine im Wesentlichen zylindrische Buchsenaufnahme 52 aufweisen. Die Buchsenaufnahme 52 kann dabei konfiguriert sein die Buchse 10 drehfest zu lagern bzw. zu fixieren. Dazu kann die Buchsenaufnahme 52 beispielhaft einen oder mehrere radial einwärts gerichtete Vorsprünge aufweisen und/oder mit dem Halteelement 30 der Buchse 10 eine Verzahnung ausbilden. Alternativ oder zusätzlich kann die Buchse 10 mit einem Flansch 12 an einer Stirnseite des Gehäuses 50 reversibel oder irreversibel angeordnet, oder fixiert bzw. befestigt werden.

Weiterhin kann, wie in Fig. 3 angedeutet, das Gehäuse 50 eine oder mehrere Aufnahmeöffnungen 54 aufweisen. Die Aufnahmeöffnung 54 kann dabei konfiguriert sein einen Prüfstecker 60 zu einem oder mehrere Detektorelementen 40 zu führen und/oder einen Prüfstecker 60 in der Aufnahmeöffnung 54 festzulegen bzw. zu fixieren. Die Aufnahmeöffnung 54 kann dazu insbesondere abschnittsweise mit einem Gewinde, insbesondere mit einem Innengewinde, und/oder Vorsprüngen versehen sein. Beispielhaft kann die Aufnahmeöffnung 54 konfiguriert sein insbesondere einen Schaft des Prüfsteckers 60 aufzunehmen, wobei der Schaft des Prüfsteckers 60 in der Aufnahmeöffnung festlegbar, verschraubbar, verklebbar, etc. ist. Zur Festlegung des Prüfsteckers 60 in der Aufnahmeöffnung 54, kann der Prüfstecker 60 insbesondere einen zur Aufnahmeöffnung 54 komplementären Festlegungsabschnitt aufweisen.

Beispielhaft kann das Gehäuse 50 eine, zwei, drei, vier, fünf, sechs, sieben oder acht Aufnahmeöffnungen 54 aufweisen, um jeweils einen Prüfstecker 60 darin aufnehmen zu können und führen und/oder festlegen zu können.

Weiterhin beispielhaft können die Aufnahmeöffnungen 54 als Durchgangsöffnungen konfiguriert sein, so dass ein Prüfstecker 60 von einer Außenseite des Gehäuses 50 bis hin zu einem oder mehreren Detektorelementen 40, welche an der Buchse 10 angeordnet sind, geführt werden kann.

Alternativ können einzelne oder alle Aufnahmeöffnungen 54 als Sacklöcher konfiguriert sein, wobei der Prüfstecker 60 von einer Außenseite des Gehäuses 50 bis hin zu einem Sacklochboden der Aufnahmeöffnung 54 geführt werden kann, wobei sich beim Auftreffen des Prüfsteckers 60 am Sacklochboden Kontaktelemente, welche im Gehäuse 50 angeordnet sind, hin zu dem einen oder der mehreren Detektorelemente 40, welche an der Buchse 10 angeordnet sind, erstrecken, um diese elektrisch zu kontaktieren. Ein solcher Mechanismus kann geeignet sein, eine Zugänglichkeit eines Detektorelements 40 zu ermöglichen, welches in Richtung einer Unterseite des Gehäuses 50 ausgerichtet ist, wobei der Prüfstecker 60 selbst nicht bis zum Detektorelement 40 geführt werden muss, sondern eine elektrische Kontaktierung indirekt über in dem Gehäuse 50 angeordnete Kontaktelemente erfolgt.

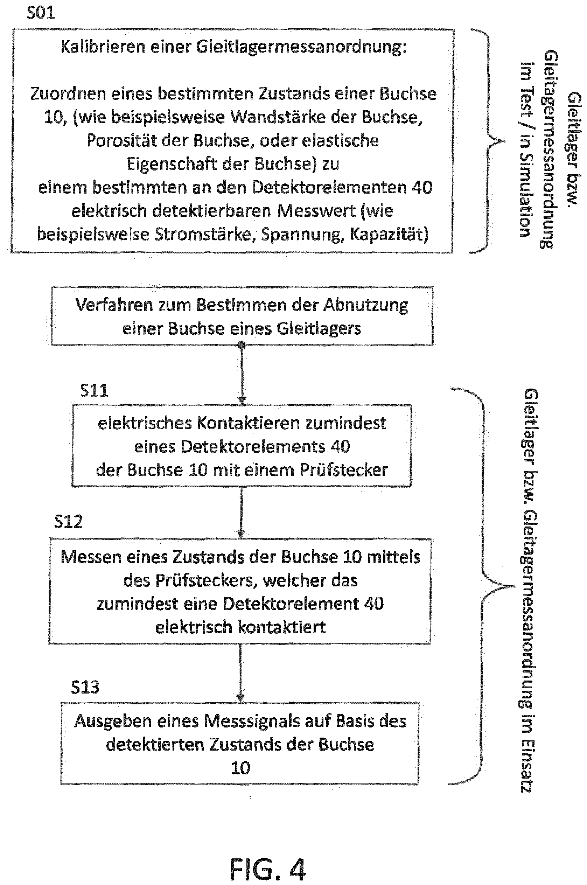

Fig. 4 zeigt ein Flussdiagramm eines Verfahrens zum Bestimmen der Abnutzung einer Buchse eines Gleitlagers. Das Verfahren zum Bestimmen der Abnutzung einer Buchse eines Gleitlagers weist beispielhaft die folgenden Schritte auf.

Beginnend mit S11: elektrisches Kontaktieren zumindest eines Detektorelements 40 der Buchse 10 mit einem Prüfstecker 60;
S12: Messen eines Zustands der Buchse 10 mittels des Prüfsteckers 60, welcher das zumindest eine Detektorelement 40 elektrisch kontaktiert; und
S13: Ausgeben eines Messsignals auf Basis des detektierten Zustands der Buchse 10.

Das ausgegebene Messsignal kann dabei vor der Ausgabe mittels einer Steuer- und/oder Regeleinheit, welche eine Speichereinheit und eine Prozessoreinheit umfasst, verschieden bearbeitet und umgewandelt werden.

Beispielsweise kann das Messsignal in einen akustisches Signal, ein optisches oder ein haptisches Signal umgewandelt werden.

Weiterhin kann vor dem Schritt S11 eine Kalibrierung einer Gleitlagermessanordnung, welche insbesondere eine Buchse, ein Gehäuse sowie einen Prüfstecker 60 umfasst, erfolgen.

Ein Schritt S01 zur Kalibrierung, kann dabei insbesondere umfassen: Kalibrieren einer Gleitlagermessanordnung, wobei einem bestimmten Zustand einer Buchse 10, wie beispielsweise Wandstärke der Buchse, Porosität der Buchse, oder elastische Eigenschaft der Buchse, einem bestimmten an den Detektorelementen elektrisch detektierbarer Messwert zugeordnet wird, wie beispielsweise Strömstärke, Spannung oder Kapazität.

Mittels dem Schritt S01 können insbesondere kritische Zustände der Buchse 10 definiert werden, wie beispielsweise eine zu geringe Wandstärke der Buchse 10 bzw. eine zu geringe Wandstärke des Gleitelements 20, oder eine zu starke Porosität der Buchse 10 bzw. des Gleitelements 20.

Das Kalibrieren der Gleitlagermessanordnung kann insbesondere auf Basis von Simulationen und/oder realer Tests erfolgen.

### Bezugszeichenliste

- 10: Buchse
- 12: Flansch
- 20: Gleitelement
- 22: Außenumfangsseite des Gleitelements
- 30: Halteelement
- 32: Öffnung
- 40: Detektorelement
- 42: elastisch rückstellfähiger Kontaktabschnitt
- 50: Gehäuse
- 52: Buchsenaufnahme
- 54: Aufnahmeöffnung
- 60: Prüfstecker
- a: axiale Richtung
- r: radiale Richtung

## Patentansprüche

1. Buchse (10) für ein Gleitlager, wobei die Buchse (10):
- im Wesentlichen zylindrisch ist, und
- zumindest ein elektrisch kontaktierbares Detektorelement (40) aufweist, welches an der Buchse (10) angeordnet ist, wobei das zumindest eine Detektorelement (40) konfiguriert ist einen Zustand der Buchse (10) zu detektieren,
**dadurch gekennzeichnet, dass**
das zumindest eine Detektorelement (40) einen in radialer Richtung (r) elastisch rückstellfähigen Kontaktabschnitt (42) zum elektrischen Kontaktieren mit einem Prüfkontakt eines Prüfsteckers (60) aufweist, und
wobei sich der elastisch rückstellfähige Kontaktabschnitt (42) in radialer Richtung (r) nach außen erstreckt.

2. Buchse (10) nach Anspruch 1, wobei der Zustand der Buchse (10) zumindest eines von:
einer Wandstärke der Buchse (10),
einer Porosität der Buchse (10), oder
einer elastische Eigenschaft der Buchse (10) umfasst.

3. Buchse (10) nach einem der Ansprüche 1 bis 2, wobei die Buchse (10) ein Gleitelement (20) aufweist, welches einer in der Buchse (10) zu lagernden Welle zugewandt ist, und ein Halteelement (30) aufweist, welches zumindest abschnittsweise radial außerhalb des Gleitelements (20) angeordnet ist.

4. Buchse (10) nach Anspruch 3, wobei das Gleitelement (20) und/oder das Halteelement (30) elektrische Isolatoren sind.

5. Buchse (10) nach Anspruch 3, wobei das Gleitelement (20) und das Halteelement (30) elektrische Isolatoren sind, wobei das Halteelement (30) einen stärker isolierenden Werkstoff aufweist, als das Gleitelement (20).

6. Buchse (10) nach einem der Ansprüche 3 bis 5, wobei zwei oder mehr Detektorelemente (40) an einer radial äußeren Seite des Gleitelements (20) angeordnet sind, und wobei
das Halteelement (30) zumindest eine Öffnung (32) aufweist, so dass die zwei oder mehr Detektorelemente (40) mittels eines Prüfsteckers (60), durch die zumindest eine Öffnung (32) hindurch, elektrisch kontaktierbar sind.

7. Buchse (10) nach einem der Ansprüche 3 bis 6, wobei das Gleitelement (20) drehfest radial innerhalb des Halteelements (30) angeordnet ist.

8. Buchse (10) nach einem der Ansprüche 1 bis 7, wobei das zumindest eine Detektorelement (40) ein Metallplättchen ist.

9. Gleitlager umfassend:
- eine Buchse (10) nach einem der Ansprüche 1 bis 8; und
- ein Gehäuse (50) in welchem die Buchse (10) austauschbar oder nicht-austauschbar angeordnet ist.

10. Gleitlager nach Anspruch 9, wobei das Gehäuse (50) zumindest eine Aufnahmeöffnung (54) aufweist, um einen Prüfstecker (60), welcher konfiguriert ist das zumindest eine Detektorelement (40) elektrisch zu kontaktieren, bereichsweise aufzunehmen, und wobei
der Prüfstecker (60) in der zumindest einen Aufnahmeöffnung (54) zu dem zumindest einen Detektorelement (40) führbar ist, und/oder in der zumindest einen Aufnahmeöffnung (54) festlegbar ist.

11. Gleitlagermessanordnung umfassend:
- Gleitlager nach einem der Ansprüche 9 oder 10; und
- zumindest einen Prüfstecker (60), wobei der zumindest eine Prüfstecker (60) das zumindest eine Detektorelement (40) elektrisch kontaktiert.

12. Verfahren zum Bestimmen der Abnutzung einer Buchse (10) eines Gleitlagers, umfassend die Schritte:
- elektrisches Kontaktieren zumindest eines Detektorelements (40) der Buchse (10) mit einem Prüfstecker (60),
wobei das zumindest eine Detektorelement (40) einen in radialer Richtung (r) elastisch rückstellfähigen Kontaktabschnitt (42) zum elektrischen Kontaktieren mit einem Prüfkontakt des Prüfsteckers (60) aufweist, und
wobei sich der elastisch rückstellfähige Kontaktabschnitt (42) in radialer Richtung (r) nach außen erstreckt;
- Messen eines Zustands der Buchse (10) mittels des Prüfsteckers (60), welcher das zumindest eine Detektorelement (40) elektrisch kontaktiert; und
- Ausgeben eines Messsignals auf Basis des detektierten Zustands der Buchse (10).

## Claims

1. Bushing (10) for a sliding bearing, wherein the bushing (10):
- is substantially cylindrical, and
- has at least one electrically contactable detector element (40), which is arranged on the bushing (10), wherein the at least one detector element (40) is configured to detect a state of the bushing (10),
**characterized in that**
the at least one detector element (40) has a contact portion (42), which is elastically resilient in the radial direction (r), for electrical contact with a test contact of a test plug (60), and
wherein the elastically resilient contact portion (42) extends outwards in the radial direction (r).

2. Bushing (10) according to claim 1, wherein the state of the bushing (10) comprises at least one of:
a wall thickness of the bushing (10),
a porosity of the bushing (10), or
an elastic property of the bushing (10).

3. Bushing (10) according to any one of claims 1 to 2, wherein the bushing (10) has a sliding element (20), which faces a shaft to be supported in the bushing (10), and has a holding element (30), which is arranged at least in portions radially outside the sliding element (20).

4. Bushing (10) according to claim 3, wherein the sliding element (20) and/or the holding element (30) are electrical insulators.

5. Bushing (10) according to claim 3, wherein the sliding element (20) and the holding element (30) are electrical insulators, wherein the holding element (30) comprises a thicker insulating material than the sliding element (20).

6. Bushing (10) according to any one of claims 3 to 5, wherein two or more detector elements (40) are arranged on a radially outer side of the sliding element (20), and wherein
the holding element (30) has at least one opening (32), so that the two or more detector elements (40) are electrically contactable by means of a test plug (60), through the at least one opening (32).

7. Bushing (10) according to any one of claims 3 to 6, wherein the sliding element (20) is arranged radially inside the holding element (30) non-rotatably.

8. Bushing (10) according to any one of claims 1 to 7, wherein the at least one detector element (40) is a metal plate.

9. Sliding bearing comprising:
- a bushing (10) according to any one of claims 1 to 8; and
- a housing (50) in which the bushing (10) is arranged exchangeably or non-exchangeably.

10. Sliding bearing according to claim 9, wherein the housing (50) has at least one receiving opening (54) in order to receive, in regions, a test plug (60) which is configured to contact electrically the at least one detector element (40), and wherein
the test plug (60) is guidable in the at least one receiving opening (54) to the at least one detector element (40) and/or is fixable in the at least one receiving opening (54).

11. Sliding bearing measuring arrangement comprising:
- sliding bearings according to any one of claims 9 or 10; and
- at least one test plug (60), wherein the at least one test plug (60) electrically contacts the at least one detector element (40).

12. Method for determining the wear of a bushing (10) of a sliding bearing, comprising the steps of:
- electrically contacting at least one detector element (40) of the bushing (10) with a test plug (60),
wherein the at least one detector element (40) has a contact portion (42), which is elastically resilient in the radial direction (r), for electrical contact with a test contact of a test plug (60), and
wherein the elastically resilient contact portion (42) extends outwards in the radial direction (r);
- measuring a state of the bushing (10) by means of the test plug (60), which electrically contacts the at least one detector element (40); and
- outputting a measurement signal on the basis of the detected state of the bushing (10).

## Revendications

1. Douille (10) pour un palier lisse, dans laquelle la douille (10) :
- est sensiblement cylindrique, et
- présente au moins un élément détecteur (40) pouvant être amené en contact électrique, lequel est disposé sur la douille (10), dans laquelle l'au moins un élément détecteur (40) est configuré pour détecter un état de la douille (10), **caractérisée en ce que**
l'au moins un élément détecteur (40) présente une section de contact (42) pouvant effectuer un rappel élastique dans la direction radiale (r) pour établir un contact électrique avec un contact de test d'une fiche de test (60), et
dans laquelle la section de contact (42) pouvant effectuer un rappel élastique s'étend vers l'extérieur dans la direction radiale (r).

2. Douille (10) selon la revendication 1, dans laquelle l'état de la douille (10) comprend au moins un de :
une épaisseur de paroi de la douille (10),
une porosité de la douille (10), ou
une propriété élastique de la douille (10).

3. Douille (10) selon l'une quelconque des revendications 1 à 2, dans laquelle la douille (10) présente un élément de glissement (20), lequel est tourné vers un arbre à monter dans la douille (10), et présente un élément de maintien (30), lequel est disposé au moins par endroits à l'extérieur radialement de l'élément de glissement (20).

4. Douille (10) selon la revendication 3, dans laquelle l'élément de glissement (20) et/ou l'élément de maintien (30) sont des isolants électriques.

5. Douille (10) selon la revendication 3, dans laquelle l'élément de glissement (20) et l'élément de maintien (30) sont des isolants électriques, dans laquelle l'élément de maintien (30) présente un matériau présentant un pouvoir isolant plus important que l'élément de glissement (20).

6. Douille (10) selon l'une quelconque des revendications 3 à 5, dans laquelle deux éléments détecteurs (40) ou plus sont disposés sur un côté radialement extérieur de l'élément de glissement (20) et dans laquelle
l'élément de maintien (30) présente au moins une ouverture (32), de telle sorte que les deux éléments détecteurs (40) ou plus peuvent être amenés en contact électrique au moyen d'une fiche de test (60), à travers l'au moins une ouverture (32) de part en part.

7. Douille (10) selon l'une quelconque des revendications 3 à 6, dans laquelle l'élément de glissement (20) est disposé de manière solidaire en rotation à l'intérieur radialement de l'élément de maintien (30).

8. Douille (10) selon l'une quelconque des revendications 1 à 7, dans laquelle l'au moins un élément détecteur (40) est une platine métallique.

9. Palier lisse comprenant :
- une douille (10) selon l'une quelconque des revendications 1 à 8 ; et
- un boîtier (50), dans lequel la douille (10) est disposée de manière remplaçable ou de manière non remplaçable.

10. Palier lisse selon la revendication 9, dans lequel le boîtier (50) présente au moins une ouverture de réception (54) pour recevoir par endroits une fiche de test (60), laquelle est configurée pour établir un contact électrique avec l'au moins un élément détecteur (40), et dans lequel
la fiche de test (60) peut être guidée dans l'au moins une ouverture de réception (54) vers l'au moins un élément détecteur (40) et/ou peut être fixée dans l'au moins une ouverture de réception (54).

11. Ensemble de mesure à paliers lisses comprenant :
- des paliers lisses selon l'une quelconque des revendications 9 ou 10 ; et
- au moins une fiche de test (60), dans lequel l'au moins une fiche de test (60) établit un contact électrique avec l'au moins un élément détecteur (40).

12. Procédé de détermination de l'usure d'une douille (10) d'un palier lisse, comprenant les étapes :
- d'établissement d'un contact électrique entre au moins un élément détecteur (40) de la douille (10) et une fiche de test (60),
dans lequel l'au moins un élément détecteur (40) présente une section de contact (42) pouvant effectuer un rappel élastique dans la direction radiale (r) destinée à établir un contact électrique avec un contact de test de la fiche de test (60), et
dans lequel la section de contact (42) pouvant effectuer un rappel élastique s'étend vers l'extérieur dans la direction radiale (r) ;
- de mesure d'un état de la douille (10) au moyen de la fiche de test (60), laquelle établit un contact électrique avec l'au moins un élément détecteur (40) ; et
- d'émission d'un signal de mesure sur la base de l'état détecté de la douille (10).
